# EUROPEAN PATENT SPECIFICATION

(11) **EP 0 672 869 B1**
(45) Date of publication and mention of the grant of the patent: **25.03.1998**
(21) Application number: 95100173.4
(22) Date of filing: 09.01.1995
(51) Int. Cl.: F24F 3/16, B03C 3/72, B03C 3/155

(54) **Air purifier apparatus with an electrostatic filter**
Luftreiniger mit einem Elektrofilter
Purificateur d'air avec filtre électrostatique

(30) Priority: 16.03.1994 IT PN940015
(43) Date of publication of application: 20.09.1995
(73) Proprietor: PROCOND ELETTRONICA S.p.A., 32013 Longarone (Belluno) (IT)
(72) Inventor: De Marco, Doreano, IT-32010 Zoldo Alto (Belluno) (IT)
(74) Representative: Busca, Luciano

(56) References cited:
- GB-A- 2 127 556
- US-A- 3 504 482

## Description

This invention relates to an improvement in an air purifier apparatus of the type comprising an electrostatic filter.

Such air purifiers are largely known to substantially comprise a conduit in which a flow of air, circulating therethrough in either a natural or a fan-assisted way, is conveyed so as to flush in a sequence a first electrode and an electrically conductive filter acting as a second electrode. Between these two electrodes a high direct voltage is applied so that dirt particles suspended in said air stream are ionized in correspondence of the first electrode and, due to the electrostatic effect , are then attracted by the filter, on which they settle due also to a mechanical effect.

Air purifiers of this type are particularly effective in their performance capabilities, but require frequent cleaning or replacement of the filter. The latter is therefore installed in a removable way inside the air flow conduit, in a seat that comprises also electrical contact means enabling the filter to be removably connected to a power supply source. Particularly in household applications, ie. where the users may not be adequately skilled technically, it may quite easily happen that, after cleaning or replacement, the filter is installed back in its seat in an incorrect way so that its electrical connection to the power supply source fails to be restored. Quite obviously, this would considerably impair the performance effectiveness of the air purifier as a whole.

It is therefore a main purpose of the present invention to provide an air purifier apparatus equipped with an electrostatic filter, which is adapted to minimize the possibility for the filter to operate under non-correct conditions.

It is a further object of the present invention to provide an air purifier apparatus of the above cited type, which is capable of operating in a particularly reliable and economical way under a particularly low energy consumption.

US-A-3 504 482 discloses an air purifier apparatus comprising the features of the preamble of claim 1 and with flow sensing means for de-energizing the apparatus when air flow reaches a predetermined minimum value.

According to the invention, such aims are reached in an air purifier apparatus using an electrostatic filter and featuring the characteristics as claimed in the appended claims.

The characteristics and the advantages of the present invention will be better understood from the following description which is given by way of non-limiting example with reference to the accompanying drawings in which:
- Figure 1 is a schematical view of an air purifier apparatus according to the present invention;
- Figure 2 is a view illustrating a preferred embodiment of a component part of the air purifier apparatus shown in Figure 1;
- Figures 3 and 4 are views illustrating respective variants of the component part shown in Figure 2.

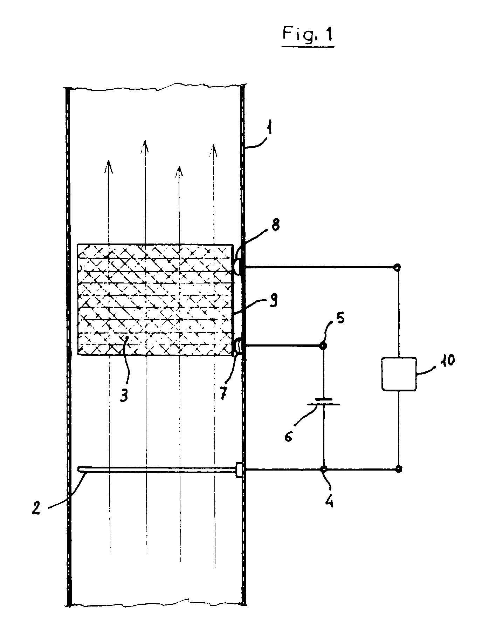

Referring now to Figure 1, it can be seen that the air purifier apparatus comprises a conduit 1 of an insulating material, in which an air flow is capable of circulating in the direction shown by the arrows, either by natural or forced convection. In an essentially *per sè* known manner, in the conduit 1 there are located a first electrode 2 and at least an electrostatic filter 3, which are arranged in sequence with respect to the direction of the flow of air and are capable of respectively ionizing and attracting, and retaining, the dirt particles that are suspended in the air stream passing therethrough.

The electrode 2, which may for instance be constituted by a metal rod, is connected to the terminal 4 of a high-voltage DC power supply source, which is generally indicated with 6 in Figure 1 and which shall be understood as being associated with a *per sè* known type of main on-off switch (not shown).

The filter 3 acts as a second electrode and, to this purpose, it may be made of a slightly conductive cardboard material or may be of the metal mesh type or the like. In particular, the filter 3 is connected to the opposite terminal 5 of said high-voltage DC power supply source 6 through at least an electrical contact 7. The latter is mounted inside the conduit 1 in correspondence of a seat (not shown for greater simplicity) adapted to accomodate the filter 3, in a removable way, in an operational position in which it is connected to the afore cited terminal 5.

In a position adjacent to the contact 7 there is provided at least a further electrical contact 8; these two contacts are capable of being interconnected through the filter 3 when the latter is located correctly in its operational position. To this purpose, the filter 3 may be provided with an area 9, or the like, which is made of a highly conductive material (as, for instance, copper) and capable of creating a kind of short-circuit bridge between the contacts 7 and 8 when the filter 3 is in its operational position.

Between the contact 8 and the electrode 2 there is connected an alarm indicating device 10 which, as it will be explained more in detail later on, is adapted to be driven by the power supply source 6 so as to be able to indicate any possible malfunctioning condition of the electrostatic filter, such as in particular it not being connected to the same power supply source 6 in the correct way.

According to a feature of the present invention, said alarm device is energized by the power supply source 6 through the filter 3 itself, which, as it has already been illustrated above, is adapted to short-circuit the electrical contacts 7 and 8. Therefore, said alarm device is energized only when also the electrostatic filter is regularly energized, so that it can indicate a condition of regular operation. In the opposite case, the alarm device 10 remains de-energized and in this way indicates an alarm condition. In such a way, after a cleaning operation or a replacement, the filter 3 is effectively prevented from possibly being mounted back in its seat in an irregular manner that would not enable it to be energized from said power supply source, without this malfunctioning condition being even indicated to the user.

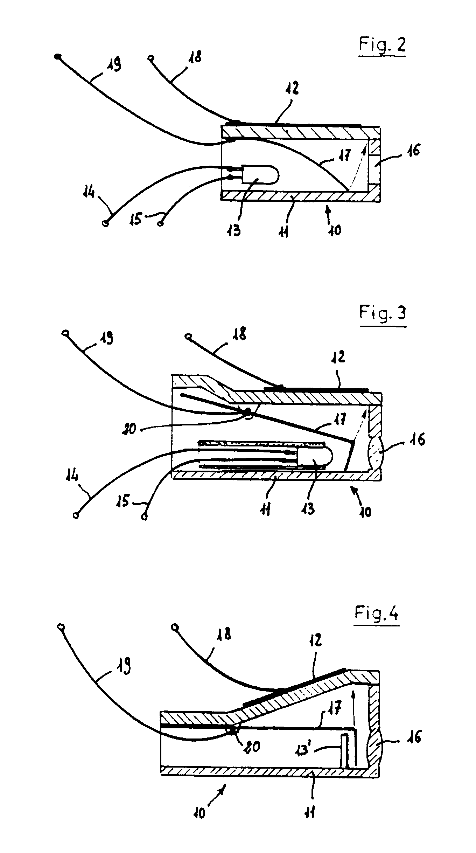

Said alarm indicating device 10 may for instance comprise an acoustic or optical indicator. However, in a preferred way, it is made in the way that will be now described with reference to Figure 2, in view of advantageously minimizing its power input and energy usage. Such an alarm indicator 10 comprises mainly a hollow casing 11 of insulating material. On the outer surface of the casing 11 (preferably on the upper portion) there is attached a metal blade 12 (for instance, of copper), whereas inside the casing 11 there is housed a LED 13 or a similar display means, whose terminals 14, 15 shall be understood as being connected directly to the terminals of a usual low-voltage power supply source (not shown).

When the air purifier is switched on, said LED 13 is normally energized, but is visible through a window 16 provided on the casing 11 only if a normally closed shutter 17 is actuated into its open position. More precisely, the shutter 17 is formed by a thin, flexible metal blade, for instance of aluminium, possessing a shape-memory ability such as to normally keep it in the bent condition shown in Figure 2. Through respective conductors 18, 19, said metal blades 12 and 17 shall be understood as being respectively connected to the terminal 4 of the power supply source and the electrical contact 8, or vice-versa. As a consequence, when the filter 3 is correctly positioned in contact with said electrical contacts 7, 8, the voltage from the power supply source 6 will be also applied between the metal blades 12 and 17, between which an electrostatic field is therefore generated. The latter attracts the flexible blade 17 into a position adjacent to the stationary blade 12 (as shown by the arrow in Figure 2); the shutter 17 is thus opened, thereby enabling the LED 13 to indicate through the window 16 the prevailing condition of correct operation of the whole air purifier.

As it can be noticed, the alarm indicating device 10 is advantageously simple in its construction, inexpensive, reliable and does not imply any substantial power input to its component parts. In particular, no electric current is delivered to it by the high-voltage power supply source 6.

In the variant shown in Figure 3, the shutter 17 is of the position-memory type; it is made in the form of a lever which is hinged in a slightly out-of-balance way at its fulcrum 20, so that it is able to normally conceal the display 13 by the effect of gravity. This requires a slight electrostatic attraction force to be displaced towards the blade 12 when the alarm indicator 10 is connected to the power supply source 6. In order to facilitate the movements of the shutter 17, the casing 11 may be given a shape as shown in Figure 3, while the conductor 19 is connected to the shutter 17 in correspondence of its fulcrum 20.

In the variant illustrated in Figure 4, the display 13' is simply provided in the form of a coloured band or the like, which is visible through a window 16 that preferably comprises a magnifying lens. The operation of this alarm indicating device 10 is similar to that of the variant appearing in Figure 3, wheras the indicator itself does not require any power supply source for its display 13'.

## Claims

1. Air purifier apparatus comprising at least a first electrode (2) connected to the terminal of a power supply source (6), as well as at least an electrostatic filter (3) acting as a second electrode and adapted to be connected to the opposite terminal of said power supply source, through first contact means (7), when it is removably arranged in a pre-determined operational position, **characterized in that** it further includes alarm indicating means (10) adapted to be operated to indicate a normal condition of regular operation when the electrostatic filter (3) is connected to said power supply source (6).

2. Air purifier apparatus according to claim 1, **characterized in that** said alarm indicating means (10) are arranged to be connected to the power supply source (6) through said first contact means (7) and a second contact means (8), said first and second contact means being interconnected with each other by said electrostatic filter (3) when the latter is correctly arranged in said operational position.

3. Air purifier apparatus according to claim 1, **characterized in that** said alarm indicating means (10) comprise display means (13, 13') that are normally concealed by shutter means (17) adapted to be moved into an opening position, by the effect of an electrostatic attraction, when said alarm indicating means (10) are connected to the power supply source (6).

4. Air purifier apparatus according to claim 3, **characterized in that** said shutter means comprise a first shape-memory or position-memory metal blade (17) adjacent to a second metal blade (12), between said metal blades there being generated, when said alarm indicating means (10) are connected to the power supply source (6), an electrostatic field capable of displacing said first metal blade towards the second one.

## Patentansprüche

1. Luftreinigervorrichtung, die wenigstens eine erste Elektrode (2), die mit dem Anschluß einer Spannungsquelle (6) verbunden ist, sowie wenigstens einen elektrostatischen Filter (3) umfaßt, der als eine zweite Elektrode wirkt und über eine erste Kontakteinrichtung (7) mit dem entgegengesetzten Anschluß der Spannungsquelle verbunden wird, wenn er lösbar in einer vorgegebenen Funktionsposition angeordnet ist, **dadurch gekennzeichnet**, daß sie weiterhin eine Alarmanzeigeeinrichtung (10) enthält, die in Funktion gesetzt wird, um einen normalen Zustand ordnungsgemäßer Funktion anzuzeigen, wenn der elektrostatische Filter (3) mit der Spannungsquelle (6) verbunden ist.

2. Luftreinigervorrichtung nach Anspruch 1, **dadurch gekennzeichnet**, daß die Alarmanzeigeeinrichtung (10) mit der Spannungsquelle (6) über die erste Kontakteinrichtung (7) und eine zweite Kontakteinrichtung (8) verbunden wird, wobei die erste und die zweite Kontakteinrichtung miteinander durch den elektrostatischen Filter (3) verbunden sind, wenn letzterer ordnungsgemäß in der Funktionsposition angeordnet ist.

3. Luftreinigervorrichtung nach Anspruch 1, **dadurch gekennzeichnet**, daß die Alarmanzeigeeinrichtung (10) eine Anzeigeeinrichtung (13, 13') umfaßt, die normalerweise von einer Verschlußeinrichtung (17) verdeckt ist, die durch die Wirkung einer elektrostatischen Anziehung in eine Öffnungsposition bewegt wird, wenn die Alarmanzeigeeinrichtung (10) mit der Spannungsquelle (6) verbunden wird.

4. Luftreinigervorrichtung nach Anspruch 3, **dadurch gekennzeichnet**, daß die Verschlußeinrichtung eine erste Metallzunge (17) mit Formgedächtnis oder Positionsgedächtnis an eine zweite Metallzunge (12) angrenzend umfaßt, wobei zwischen den Metallzungen ein elektrostatisches Feld erzeugt wird, das die erste Metallzunge auf die zweite zu verschieben kann, wenn die Alarmanzeigeeinrichtung (10) mit der Spannungsquelle (6) verbunden wird.

## Revendications

1. Dispositif purificateur d'air comprenant au moins une première électrode (**2**) reliée à la borne d'une source d'alimentation électrique (**6**), ainsi qu'au moins un filtre électrostatique (**3**) servant de deuxième électrode et adapté pour être connecté à la borne opposée de ladite source d'alimentation électrique, par des premiers moyens de contact (**7**), lorsqu'il est placé de manière amovible dans une position de service prédéterminée, caractérisé en ce qu'il comprend de plus des moyens indicateurs d'alarme (**10**) adaptés pour être actionnés pour indiquer un état normal de fonctionnement régulier lorsque le filtre électrostatique (**3**) est relié à ladite source d'alimentation électrique (**6**).

2. Dispositif purificateur d'air selon la revendication 1, caractérisé en ce que lesdits moyens indicateurs d'alarme (**10**) sont agencés pour être connectés à la source d'alimentation électrique (**6**) par le biais des premiers moyens de contact (**7**) et de seconds moyens de contact (**8**), lesdits premiers et seconds moyens de contact étant interconnectés l'un à l'autre par ledit filtre électrostatique (**3**) lorsque ce dernier est correctement agencé dans ladite position de service.

3. Dispositif purificateur d'air selon la revendication 1, caractérisé en ce que lesdits moyens indicateurs d'alarme (**10**) comprennent des moyens d'affichage (**13, 13'**) qui sont normalement dissimulés par des moyens de fermeture (**17**) adaptés pour être amenés dans une position d'ouverture, sous l'effet d'une attraction électromagnétique, lorsque lesdits moyens indicateurs d'alarme (**10**) sont reliés à une source d'alimentation électrique (**6**).

4. Dispositif purificateur d'air selon la revendication 3, caractérisé en ce que lesdits moyens de fermeture comprennent une première lame métallique (**17**) à mémoire de forme ou de position adjacente à une seconde lame métallique (**12**), un champ électrostatique étant généré entre lesdites lames métalliques lorsque lesdits moyens indicateurs d'alarme (**10**) sont reliés à la source d'alimentation électrique (**6**), champ qui est capable de déplacer ladite première lame métallique en direction de la seconde.
